# EUROPEAN PATENT APPLICATION

(11) **EP 2 508 294 A2**
(43) Date of publication of application: **10.10.2012**
(21) Application number: 12163253.3
(22) Date of filing: 04.04.2012
(51) Int. Cl.: B23K 35/00, B23K 35/02

(54) **Method of estabilishing filler metal chemistry for a filler rod for joining components**

(30) Priority: 08.04.2011 US 201113083181
(71) Applicant: General Electric Company, Schenectady, NY 12345 (US)
(72) Inventor: Cui, Yan, Greenville, SC 29615 (US); Dorriety, Daniel James, Greenville, SC 29615 (US); Kottilingam, Srikanth Chandrudu, Greenville, SC 29615 (US); Lin, Dechao, Greenville, SC 29615 (US); Sam, Hai Buu, Greenville, SC 29615 (US); Tollison, Brian Lee, Greenville, SC 29615 (US)
(74) Representative: Szary, Anne Catherine

(57) **Abstract**

A method of establishing filler metal composition for joining components (40, 42) includes determining an initial desired filler metal chemistry, adjoining a first filler rod (16, 102, 122, 152, 162) having a first portion of the desired filler metal chemistry with a second filler rod (18, 104, 124, 154, 164) having a second portion of the desired filler metal chemistry to form a test filler rod (14, 100, 120, 150, 160), joining a first component (40) formed from a first material to a second component (42) formed from a second material at a weld joint (50) with the test filler rod (14, 100, 120, 150, 160) providing a filler metal portion of the weld joint (50), and testing the weld joint (50) for desired mechanical, chemical, and weldability properties to establish a desired filler metal composition.

## Description

### BACKGROUND OF THE INVENTION

The subject matter disclosed herein relates to the art of metal joining and, more particularly, to a method of establishing filler metal chemistry for a filler rod for joining components.

High strength and oxidation resistant alloys such as nickel-based super alloys are widely used in the construction of turbomachines. The super alloys possess strength, weight, durability, and temperature properties desirable for use in turbomachine components. However, in general, super alloys have poor fusion weldability due to a tendency for liquation cracking and strain age cracking (SAC). SAC is closely related to gamma prime volume fraction, which is a function of aluminum (Al) and titanium (Ti) content. An increase in the gamma prime fraction and, in particular Al content, increases the tendency for SAC. SAC generally occurs in a weld metal adjacent to a fusion boundary (WMATFB) region and/or propagates into a heat-affected zone (HAZ) of a welded joint. Material in the WMATFB region includes base metal resulting from dilution and filler metal added during welding. As such, the WMATFB region should include a chemistry that falls within a weldable material region to avoid, or at least lower, a tendency towards SAC.

If the WMATFB region chemistry falls within the weldable material region, cracking tendency is low. In a tungsten inert gas (TIG) welding process for example, a typical dilution ratio is about 30:70 which means 30% of the WMATFB region includes base metal and 70% of the WMATFB region includes filler metal. Accordingly, filler metal for welding a particular alloy must possess certain chemical composition and mechanical properties at elevated temperature. Presently, filler metal is selected based on chemical composition, mechanical properties, and weldability. However, in addition to possessing desirable chemical properties, filler metal must also possess certain mechanical properties and oxidation performance at elevated temperatures. Selecting a particular filler metal requires a trade off between materials having desirable chemical or mechanical properties for a particular application. Accordingly, many engineers have turned to having specific filler metals specially fabricated for a particular super alloy.

Determining a desired, non-standard, filler metal chemistry is a time consuming and costly process. Once an initial chemistry is chosen, an order is placed with a fabrication facility for the non-standard filler metal. Non-standard filler metal cannot be ordered in small quantities. An order for a filler metal having a specific chemistry generally requires a commitment of 100 lbs (45.35 kg) or more. Once received, the filler metal is used to form a joint in a welding operation and the joint is tested. If the filler metal does not have the desired properties, filler metal chemistry is adjusted, and a new order for filler metal is placed. This process continues until the desired properties are achieved. While this trial and error process ultimately leads to a desired filler metal chemistry, the cost associated with multiple orders of filler metal is prohibitive as are the costs associated with testing and warehousing spools of filler metal

### BRIEF DESCRIPTION OF THE INVENTION

According to one aspect of an exemplary embodiment, a method of establishing filler metal composition for joining components includes determining an initial desired filler metal chemistry, adjoining a first filler rod having a first portion of the desired filler metal chemistry with a second filler rod having a second portion of the desired filler metal chemistry to form a test filler rod, joining a first component formed from a first material to a second component formed from a second material at a weld joint with the test filler rod providing a filler metal portion of the weld joint , and testing the weld joint for desired mechanical, chemical and weldability properties to establish a desired filler metal composition..

According to another aspect of the exemplary embodiment, a process for establishing a desired filler metal composition for joining components includes selecting a first filler rod having a first filler metal chemistry, selecting a second filler rod having a second filler metal chemistry, twisting together the first and second filler rods forming a test filler rod having a twisted region comprising the first and second filler metal chemistries, joining a first component formed from a first material to a second component formed from a second material with a welding process employing the test filler rod, and testing a weld joint formed between the first and second components.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a flow chart illustrating a method for establishing filler metal chemistry for a filler rod for joining components;
FIG. 2 illustrates a test filler rod including a first filler rod having a first filler metal composition twisted together with a second filler rod having a second filler metal composition;
FIG. 3 illustrates a first component formed from a first material joined to a second component formed from a second material at a weld joint that includes filler metal from the test filler rod;
FIG. 4 illustrates a test filler rod including a first filler rod having a first filler metal composition twisted together with a second filler rod having a second filler metal composition, and a third filler rod having a third filler metal composition;
FIG. 5 illustrates a test filler rod including a first filler rod having a first filler metal composition twisted together with a second filler rod having a second filler metal composition, a third filler rod having a third filler metal composition, and a fourth filler rod having a fourth filler metal composition;
FIG. 6 illustrates a test filler rod including a first filler rod having a first diameter twisted together with a second filler rod having a second diameter that is distinct from the first diameter; and
FIG. 7 illustrates a test filler rod including a first filler rod having a first diameter twisted together with a second filler rod having a second diameter that is distinct from the first diameter, and a third filler rod having a third diameter that is distinct from the first and second diameters.

The detailed description explains embodiments of the invention, together with advantages and features, by way of example with reference to the drawings.

### DETAILED DESCRIPTION OF THE INVENTION

Joining components formed from various materials, using a welding process requires the use of filler metals having certain chemical properties. Chemical properties are specifically selected to mitigate liquation cracking and strain age cracking (SAC). SAC is closely related to gamma prime volume fraction, which is a function of aluminum (Al) and titanium (Ti) content. An increase in the gamma prime fraction and, in particular Al content, leads to an increased tendency for SAC. SAC generally occurs in a weld metal adjacent to a fusion boundary (WMATFB) region and/or propagates into a heat-affected zone (HAZ) of a welded joint. Material in the WMATFB region includes base metal resulting from dilution of the super alloys caused by heat from the welding process, and filler metal added during the welding process. Conventionally, establishing the desired chemical properties requires a costly trial and error process. The following exemplary embodiments describe a process for establishing a desired filler metal chemistry without requiring substantial capital costs associated with purchasing, testing, and warehousing numerous lots of bulk non-standard filler rod material.

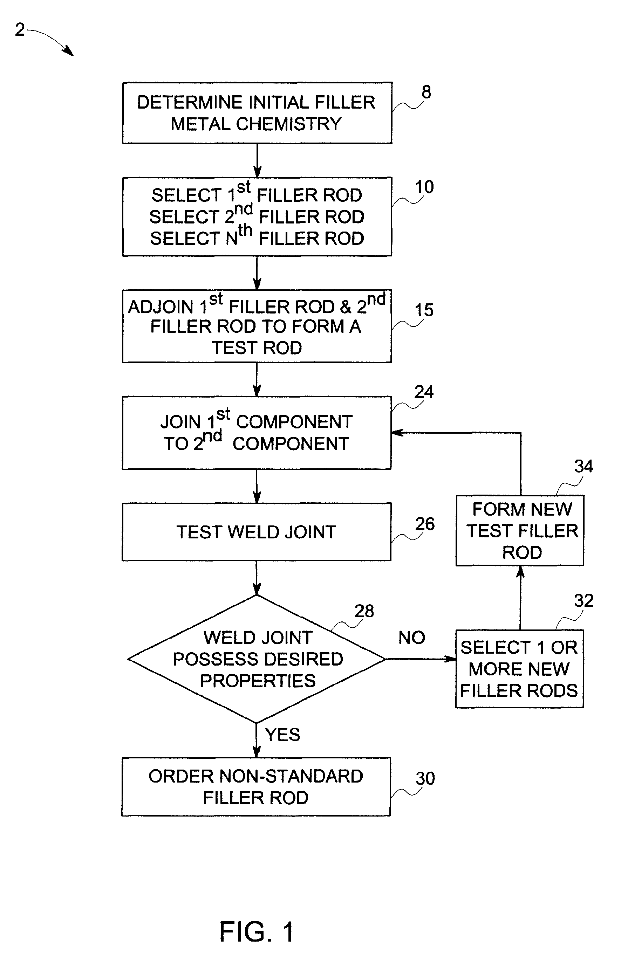

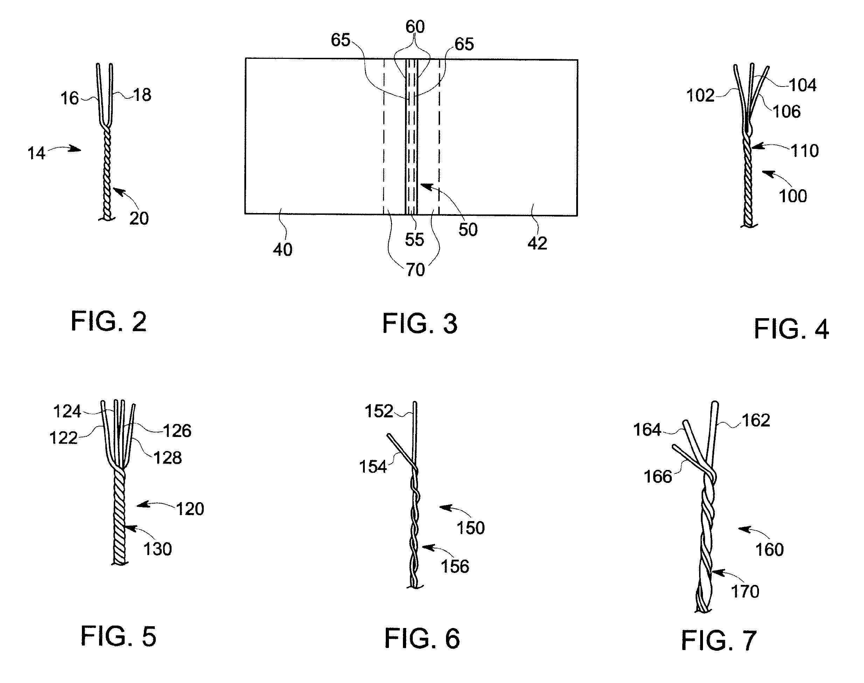

With reference to FIG. 1, a method of establishing a desired filler metal chemistry for a filler rod in accordance and exemplary embodiment is indicated generally at 2. In block 8, an initial, non-standard filler metal chemistry is determined based on available tables, charts, and learned experience. The non-standard filler metal chemistry is selected to ensure desired mechanical properties of a weld joint. At this point, personnel select a first filler rod having a first portion of the non-standard filler metal chemistry and a second filler rod having a second portion of the non-standard filler metal chemistry as shown in block 10. The number of filler rods selected can vary depending upon available filler rods and the desired initial non-standard filler metal chemistry. Once selected, the first, second, and n^{th} filler rods are adjoined to form a test rod such as illustrated at 14 in FIG. 2 as indicated in step 15.

For example, data in an SAC chart indicates that the WMATFB region of a TIG weld repair of an R108 casting base metal with Nimonic 263 filler metal is located almost exactly upon a threshold line between a weldable material range and a non-weldable material range. The threshold line has a slope that is defined in terms a ratio of Al and Ti content. Filler metal chemistry having an aluminum content that falls below the threshold line is said to have good weldability and cracking is less likely to occur. If the filler metal chemistry has an aluminum content that falls above the threshold line, weldability is said to be bad and cracking is more likely to occur. Being located on the threshold line indicates that cracking is prone to occur at the WMATFB region and HAZ under a high strain level. Thus, a filler metal chemistry that moves the WMATFB region to below the threshold line is desirable. R108 is known to possess good mechanical properties and oxidation performance properties at elevated temperatures. Hence, filler metal chemistry is selected to closely match such properties under available weldability. However, standard commercial off the shelf (COTS) filler rods having filler metal chemistry that both match the mechanical and oxidation performance properties of R108 and also maintain the WMATFB region in the weldable material range do not exist.

Accordingly test filler rod 14 includes a first filler rod 16 having a first portion of the desired non-standard filler rod chemistry and a second filler rod 18 having a second portion of the desired non-standard filler rod chemistry. First and second filler rods 16 and 18 are adjoined and twisted together to form a twisted region 20 that comprises the desired non-standard filler metal chemistry. In accordance with the exemplary embodiment shown in FIG. 2, first filler rod 16 is formed from Nimonic C263, and second filler rod 18 is formed from a material having a lower aluminum content such as Hastelloy W. As a result, test filler rod 14 comprises a non-standard filler metal chemistry that shifts the WMATFB region to a point below the threshold line as compared with using C263 alone. This new, non-standard filler metal chemistry decreases cracking tendency in the WMATFB region and HAZ.

Once formed, test filler rod 14 is employed in a welding process to join a first component 40 formed from a first super alloy to a second component 42 formed from a second super alloy as indicated in block 24 and shown in FIG. 3. First and second components 40 and 42 can be formed from substantially similar or substantially dissimilar alloys. In accordance with the exemplary aspect shown, first and second components 40 and 42 are formed from super alloys. Once joined, a weld joint 50 formed from weld metal 55 that includes filler metal from test filler rod 14 is formed between first and second components 40 and 42. In addition, the welding process results in the formation of a fusion boundary (FB) 60, a WMATFB region 65, and a heat affected zone (HAZ) 70. Once joined, weld joint 50 and, more specifically weld metal 55 is subjected to one or more tests to determine whether the non-standard filler metal chemistry produces the desired mechanical and oxidation performance properties such as indicated in block 26. In addition, weld metal 55 is subjected to a weldability test. If the non-standard filler metal chemistry resulting from the joining of first and second filler rods does produce the desired mechanical, oxidation , and weldability performance properties as indicated in block 28, an order may then be placed for a bulk quantity of filler rod having the non-standard filler metal chemistry as indicated in block 30. Of course, the need for placing the order should be understood to be optional.

If, however, the non-standard filler metal chemistry resulting from the joining of first and second filler rods does not produce the desired mechanical, oxidation, and weldability performance properties in block 28, alternative filler rods are selected as indicated in block 32 and joined to form a new test filler rod as indicated in block 34. The new filler rod is used to join the first and second components in block 24, and the resulting weld joint is tested in block 26. This process will continue until a non-standard filler metal chemistry that produces the desired mechanical, oxidation, and weldability performance properties.

At this point, it should be understood that the number and type of filler rods combined to form a test filler rod can vary. For example as shown in FIG. 4, a test filler rod 100 is formed from a first filler rod 102 having a first filler metal chemistry, a second filler rod 104 having a second filler metal chemistry, and a third filler rod 106 having a third filler metal chemistry. First, second, and third filler rods 102, 104, and 106 are adjoined and twisted together to form a combined twisted region 110 having a filler metal chemistry comprising the first, second, and third filler metal chemistries. FIG. 5 illustrates a test filler rod 120 formed from a first filler rod 122 having a first filler metal chemistry, a second filler rod 124 having a second filler metal chemistry, a third filler rod 126 having a third filler metal chemistry, and a fourth filler rod 128 having a fourth filler metal chemistry. First, second, third, and fourth filler rods 122, 124, 126, and 128 are adjoined and twisted together to form a combined twisted region 130 having a filler metal chemistry comprising the first, second, third, and fourth filler metal chemistries.

It should also be understood that filler rod size or diameter can vary. For example, FIG. 6 illustrates a test filler rod 150 formed from a first filler rod 152 having a first filler metal chemistry and a first diameter, and a second filler rod 154 having a second filler metal chemistry and a second diameter. In the exemplary aspect shown, the second diameter is smaller than the first diameter. Accordingly, second filler rod 154 is twisted about first filler rod 152 to form a combined twisted region 156 comprised of the first and second filler metal chemistries. By varying the diameters of the filler rods, filler metal chemistry can be fme tuned to establish a desired filler metal composition. Similarly, FIG. 7 illustrates a test filler rod 160 formed from a first filler rod 162 having a first filler metal chemistry and a first diameter, a second filler rod 164 having a second filler metal chemistry and a second diameter, and a third filler rod 166 having a third filler metal chemistry and a third diameter. In the exemplary aspect shown, the second diameter is smaller than the first diameter, and the third diameter is smaller than the second diameter. Accordingly, second and third filler rods 164 and 166 are twisted about first filler rod 162 to form a combined twisted region 170 comprised of the first, second, and third filler metal chemistries. By varying the diameters of the filler rods, filler metal chemistry can be fine tuned to establish a desired filler metal composition. It should be further understood that the filler rods used to form the test filler rod could be COTS filler rods and/or filler rods having non-standard filler metal chemistries. It should be still further understood that while described in terms of joining material formed from super alloys, the exemplary embodiment can also be employed to form filler rods for joining components formed from a wide variety of other weldable materials.

At this point it should be understood that the exemplary embodiments are directed to establish desired filler rod chemistry for joining components without the need for cost, in both time and money, of purchasing and testing filler rods having non-standard filler metal chemistries. It should also be understood, that while described in terms of joining first and second distinct super alloys, that the exemplary embodiments can be employed to develop filler metal chemistries used in joining components formed from a wide array of materials, including joining components formed from substantially similar materials.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defmed by the following numbered clauses:
1. A method of establishing filler metal composition for joining components, the method comprising:
   determining an initial desired filler metal chemistry;
   adjoining a first filler rod having a first portion of the desired filler metal chemistry and a second filler rod having a second portion of the desired filler metal chemistry to form a test filler rod;
   joining a first component formed from a first material to a second component formed from a second material at a weld joint with the test filler rod providing a filler metal portion of the weld joint; and
   testing the weld joint for desired mechanical, chemical, and weldability properties to establish a desired filler metal composition.
2. The method of clause 1, wherein adjoining the first filler rod and the second filler rod comprises twisting together the first and second filler rods.
3. The method of clause 1, wherein adjoining the first filler rod and the second filler rod includes adjoining a first filler rod having a first diameter and a second filler rod having a second diameter, the first diameter being distinct from the second diameter.
4. The method of clause 1, further comprising: adjoining a third filler rod having a third portion of the desired filler metal chemistry with the first and second filler rods.
5. The method of clause 4, wherein adjoining the third filler rod with the first and second filler rods comprises twisting together the first, second, and third filler rods.
6. The method of clause 4, further comprising: adjoining a fourth filler rod with the first, second, and third filler rods.
7. The method of clause 6, wherein adjoining the fourth filler rod with the first, second, and third filler rods comprises twisting together the first, second, third, and fourth filler rods.
8. The method of clause 1, wherein joining the first component to the second component includes joining a first component formed from a first super alloy and a second component formed from a second super alloy, the first super alloy being distinct from the second super alloy
9. The method of clause 1, wherein joining first and second components formed from first and second materials includes joining first and second components formed from substantially similar materials
10. The method of clause 1, further comprising: fabricating a filler rod having a filler metal comprising the desired filler metal composition.
11. A process for establishing a desired filler metal composition for joining components, the process comprising:
   selecting a first filler rod having a first filler metal chemistry;
   selecting a second filler rod having a second filler metal chemistry;
   twisting together the first and second filler rods forming a test rod having a twisted region comprising the first and second filler metal chemistries;
   joining a first component formed from a material to a second component formed from a second material with a welding process employing the test filler rod; and
   testing a weld joint formed between the first and second components.
12. The process of clause 11, wherein selecting the first filler rod and the second filler rod includes selecting a first filler rod having a first diameter and a second filler rod having a second diameter, the first diameter being distinct from the second diameter.
13. The process of clause 11, further comprising: twisting together a third filler rod having a third portion of the desired filler metal chemistry with the first and second filler rods.
14. The process of clause 13, wherein twisting together the third filler rod with the first and second filler rods comprises twisting together the first, second, and third filler rods to form a combined twisted region.
15. The process of clause 13, further comprising: twisting together a fourth filler rod with the first, second, and third filler rods.
16. The process of clause 15, wherein twisting together the fourth filler rod with the first, second, and third filler rods comprises twisting together the first, second, third, and fourth filler rods to form a combined twisted region.
17. The process of clause 11, wherein joining the first component to the second component comprises joining first and second components formed from substantially similar materials.
18. The process of clause 11, wherein joining the first component to the second component includes joining a first component formed from a first super alloy to a second component formed from a second super alloy, the first super alloy being distinct from the second super alloy.
19. The process of clause 11, further comprising: fabricating a filler rod having a filler metal comprising the first and second filler metal chemistries.
20. The process of clause 11, wherein testing the weld joint comprises determining mechanical, thermal and weldability performance properties of weld metal forming the weld joint.

## Claims

1. A method of establishing filler metal composition for joining components (40, 42), the method comprising:
determining an initial desired filler metal chemistry;
adjoining a first filler rod (16, 102, 122, 152, 162) having a first portion of the desired filler metal chemistry and a second filler rod (18, 104, 124, 154, 164) having a second portion of the desired filler metal chemistry to form a test filler rod (14, 100, 120, 150, 160);
joining a first component (40) formed from a first material to a second component (42) formed from a second material at a weld joint (50) with the test filler rod (14, 100, 120, 150, 160) providing a filler metal portion of the weld joint (50); and
testing the weld joint (50) for desired mechanical, chemical, and weldability properties to establish a desired filler metal composition.

2. The method of claim 1, wherein adjoining the first filler rod (16, 102, 122, 152, 162) and the second filler rod (18, 104, 124, 154, 164) comprises twisting together the first and second filler rods (16, 102, 122, 152, 162, 18, 104, 124, 154, 164).

3. The method of claim 1, wherein adjoining the first filler rod (16, 102, 122, 152, 162) and the second filler rod (18, 104, 124, 154, 164) includes adjoining a first filler rod (16, 102, 122, 152, 162) having a first diameter and a second filler rod (18, 104, 124, 154, 164) having a second diameter, the first diameter being distinct from the second diameter.

4. The method of any preceding claim, further comprising: adjoining a third filler rod (106, 126, 166) having a third portion of the desired filler metal chemistry with the first and second filler rods (16, 102, 122, 152, 162, 18, 104, 124, 154, 164).

5. The method of claim 4, wherein adjoining the third filler rod (106, 126, 166) with the first and second filler rods (16, 102, 122, 152, 162, 18, 104, 124, 154, 164) comprises twisting together the first, second, and third filler rods (16, 102, 122, 152, 162, 18, 104, 124, 154, 164, 106, 126, 166).

6. The method of claim 4 or claim 5, further comprising: adjoining a fourth filler rod (128) with the first, second, and third filler rods (16, 102, 122, 152, 162, 18, 104, 124, 154, 164, 106, 126, 166).

7. The method of claim 6, wherein adjoining the fourth filler rod (128) with the first, second, and third filler rods (16, 102, 122, 152, 162, 18, 104, 124, 154, 164, 106, 126, 166) comprises twisting together the first, second, third, and fourth filler rods (16, 102, 122, 152, 162, 18, 104, 124, 154, 164, 106, 126, 166, 128).

8. The method of any preceding claim, wherein joining the first component (40) to the second component (42) includes joining a first component (40) formed from a first super alloy and a second component (42) formed from a second super alloy, the first super alloy being distinct from the second super alloy

9. The method of any one of claims 1 to 7, wherein joining first and second components (40, 42) formed from first and second materials includes joining first and second components (40, 42) formed from substantially similar materials

10. The method of any preceding claim, further comprising: fabricating a filler rod (16, 102, 122, 152, 162) having a filler metal comprising the desired filler metal composition.
